# EUROPEAN PATENT SPECIFICATION

(11) **EP 3 056 324 B1**
(45) Date of publication and mention of the grant of the patent: **19.09.2018**
(21) Application number: 13895189.2
(22) Date of filing: 11.10.2013
(51) Int. Cl.: B26D 1/10, B26D 3/00, B26D 5/08, B26D 1/00

(54) **CUTTER BLADE, AND PROCESSING DEVICE**
SCHNEIDEMESSER UND VERARBEITUNGSVORRICHTUNG
LAME D'ÉLÉMENT DE COUPE, ET DISPOSITIF DE TRAITEMENT

(43) Date of publication of application: 17.08.2016
(73) Proprietor: Nihon Shoryoku Kikai Co., Ltd., Isesaki-shi, Gunma 372-0826 (JP)
(72) Inventor: TANAKA, Norio, Isesaki-shi Gunma 372-0826 (JP)
(74) Representative: Glawe, Delfs, Moll
(86) International application number: PCT/JP2013/077859
(87) International publication number: WO 2015/052846

(56) References cited:
- JP-A- 2003 001 639
- JP-B2- 4 231 895

## Description

### Technical Field

The present invention relates to a cutter blade and a processing device for performing, e.g., deburring processing while profiling a part of a workpiece.

### Background Art

Conventionally, as cutter blades and processing devices for performing, e.g., deburring of a workpiece, those that perform processing while profiling a part of a workpiece have been known (see, for example, Patent Literature 1).

### Citation List

### Patent Literature

### Patent Literature 1:

Japanese Patent No. 4231895

### Summary of Invention

### Technical Problem

In recent years, composite materials with a strength enhanced by mixing of fiber into plastic, such as FRP, CFRP and GFRP, have emerged and have been heavily used in various industrial products. Resin products using such composite materials easily cause damage such as chipping, breakage and/or abrasion of cutting tools because of the characteristics of the resin products, resulting decrease in lifetime of the tools such as cutter blades.

Therefore, it is necessary to use expensive tools that are less likely to be damaged and/or employ special processing methods, resulting in increase in costs of the processing devices.

An object of the present invention is to solve the aforementioned problems of the conventional techniques and provide a cutter blade and a processing device that enable processing of a composite material, for example, FRP without using an expensive cutter blade and employing a special processing method.

### Solution to Problem

In order to solve the aforementioned problems, a cutter blade according to the present invention includes the features according to claim 1 or 2. According to this configuration, the wedge angle is made to be large compared to those of the conventional techniques, enabling processing of composite materials such as FRP, CFRP and GFRP, which are difficult-to-cut materials, without damage, such as chipping, of the cutting edge portion.

Therefore, the need to use an expensive cutter blade and/or employ a special processing method for lifetime extension can be eliminated, enabling suppression of increase in costs of a processing device. Also, the provision of the profiling surface enables the cutting edge portion to be restrained from digging into the workpiece.

In the above configuration, the blade edge of the cutting edge portion is positioned behind the profiling portion. This configuration enables, even if there is a deformation in the workpiece, further restraint of the cutting edge portion from digging into the workpiece.

Also, in the above configuration, a cutter blade body may have a flat plate shape. According to this configuration, the cutter blade body has a flat plate shape, enabling the cutter blade body to easily following the workpiece during processing and thus enabling enhancement in processability.

Also, a processing device according to the present invention is a processing device including the features according to claim 4 or 5.

According to the above configuration, the wedge angle of the cutting edge portion included in the processing device is made to be large compared to those of the conventional techniques, enabling processing of composite materials such as FRP, CFRP and GFRP, which are difficult-to-cut materials, without damage, such as chipping, of the cutting edge portion. Therefore, the need to use an expensive cutter blade and/or employ a special processing method for lifetime extension can be eliminated, enabling suppression of increase in costs of the processing device. Also, the provision of the profiling portion enables the cutting edge portion to be restrained from digging into the workpiece.

### Advantageous Effects of Invention

According to the present invention, a wedge angle is made to be large compared to those of the conventional techniques, enabling processing of composite materials such as FRP, CFRP and GFRP, which are difficult-to-cut materials, without damage, such as chipping, of a cutting edge portion.

Therefore, the need to use an expensive cutter blade and/or employ a special processing method for lifetime extension can be eliminated, enabling suppression of increase in costs of a processing device. Also, provision of a profiling portion enables a cutting edge portion to be restrained from digging into a workpiece. Brief Description of Drawings

[Figure 1] Figure 1 is a diagram illustrating a processing device according to a first example.
[Figure 2] Figure 2 is an enlarged diagram of an arm distal end portion of the processing device.
[Figure 3] Figure 3 is a plan view illustrating a cutter blade and a part of attachment of the cutter blade.
[Figure 4] Figure 4 is an enlarged perspective view illustrating the cutter blade and the part of attachment of the cutter blade in deburring operation.
[Figure 5] Figure 5 is a cross-sectional view illustrating a distal end part of the cutter blade.
[Figure 6] Figure 6 is a cross-sectional view illustrating another mode of use of the cutter blade according to the first example.
[Figure 7] Figure 7 is a cross-sectional view illustrating a distal end part of a cutter blade according to a second example.
[Figure 8] Figure 8 is a cross-sectional view illustrating a distal end part of a cutter blade according to a third example.
[Figure 9] Figure 9 is a cross-sectional view illustrating a distal end part of a cutter blade according to a fourth example.
[Figure 10] Figure 10 is a cross-sectional view illustrating a distal end part of a cutter blade according to a fifth example, which is an embodiment of the present invention.
[Figure 11] Figure 11 is a cross-sectional view illustrating a distal end part of a cutter blade according to a sixth example, which is an embodiment of the present invention.

### Description of Embodiments

Examples and embodiments of the present invention will be described below with reference to the drawings.

### <First Example>

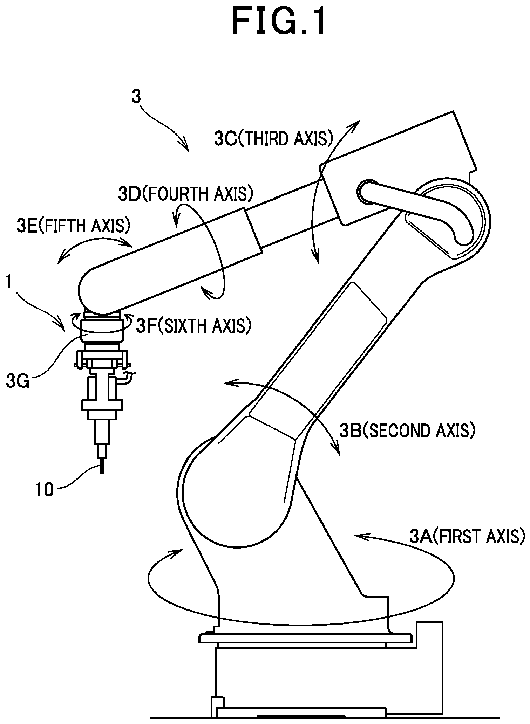

Figure 1 is a diagram illustrating a processing device 1 according to a first example not according to the present invention.

The processing device 1 is a deburring device, and includes what is called a six-axis vertical articulated robot 3, and from among joints 3A to 3F of the six-axis vertical articulated robot 3, a cutter blade 10 is held by an arm distal end portion 3G of the distal-most end joint 3F.

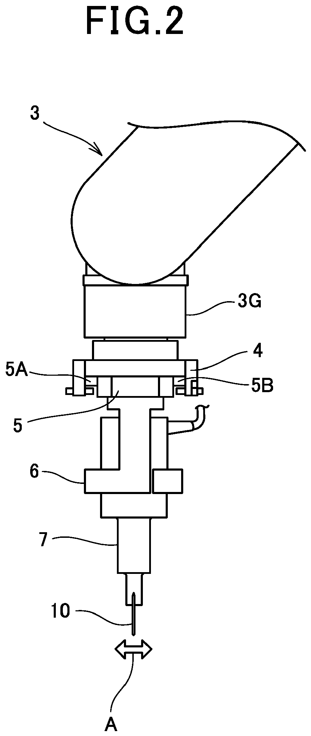

Figure 2 is an enlarged diagram illustrating the arm distal end portion 3G of the processing device 1.

An air-driven sliding table 4 is attached to the arm distal end portion 3G, and a sliding section 5 is movably provided on the sliding table 4. The sliding section 5 is driven by a pair of pneumatic cylinders 5A and 5A, which are actuated by air pressures applied to a pair of air supply ports (not illustrated) provided on opposite sides of the arm distal end portion 3G.

Since the pneumatic cylinders 5A and 5A are disposed so as to face each other across the sliding section 5, respective pressing forces of pressing the sliding section 5 in opposite directions are generated by the air pressures supplied to the air supply ports communicating with the respective pneumatic cylinders 5A. Depending on a balance between these pressing forces, a position of the sliding section 5 is movable in an arrow A direction, that is, the sliding section 5 floats relative to a resin molding described later, whereby the sliding section 5 provides a floating mechanism.

Each of the pressures applied to the respective air supply ports provided on the opposite sides of the arm distal end portion 3G can independently be controlled so as to achieve a balance between the pressures. If a weight of a tool becomes a load because of a position of the tool, the pressures applied to the respective air supply ports are automatically adjusted according to the position of the tool so as to cancel the weight of the tool out.

An ultrasonic transducer holder 6 is attached to the sliding section 5, which floats relative to a resin molding, and an ultrasonic transducer (transducer, vibrator or oscillator) 7 is attached to the ultrasonic transducer holder 6. The ultrasonic transducer 7 is not limited to a transducer using ultrasound.

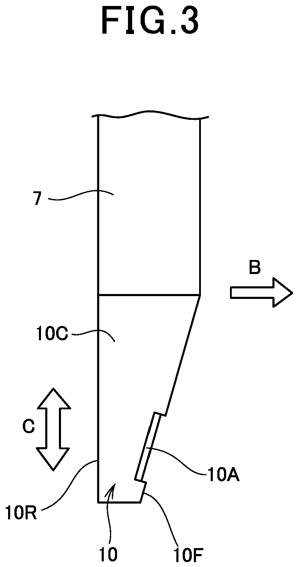

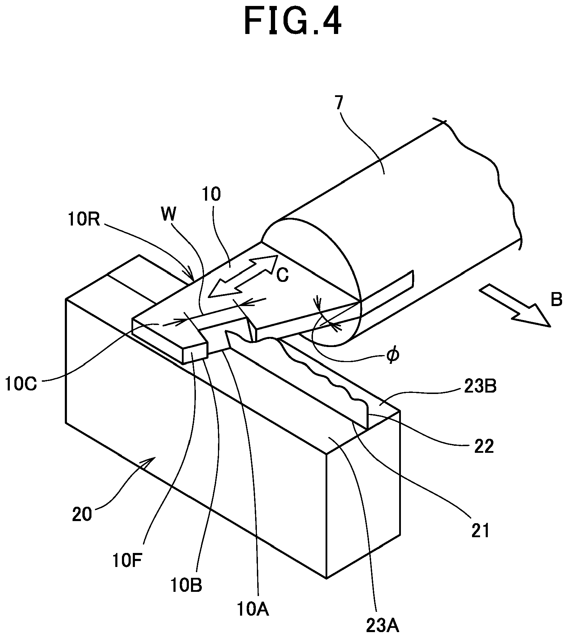

Figure 3 is a plan view illustrating a cutter blade 10 and a part of attachment of the cutter blade 10, and Figure 4 is an enlarged perspective view illustrating the cutter blade 10 and the part of the attachment of the cutter blade 10 during deburring operation.

As illustrated in Figures 3 and 4, the cutter blade 10 is fixed at a distal end of the ultrasonic transducer 7.

The cutter blade 10 includes a front end surface 10F and a rear end surface 10R, and is brought into abutment with a base portion (root) of a burr 22 formed on a partition line 21 of a resin molding 20 of a composite material, for example, CFRP (or FRP or GFRP or the like), which is an object to be processed, and surface portions 23A and 23B of the resin molding 20 and cuts the burr 22 off.

In this case, a setback angle φ of the front end surface 10F, which is arbitrarily set, is set to around 10°.

In the present example, the cutter blade 10 includes: a cutting edge portion 10A to be brought into abutment with the root of the burr 22 and cut the burr 22 off, the cutting edge portion 10A having a width W of, for example, around 10 mm; curved profiling portion 10B to be brought into abutment with and profile the respective surface portions 23A and 23B of the resin molding 20; and a flat plate-shaped cutter blade body 10C with the cutting edge portion 10A and the profiling portion 10B formed therein.

In this case, the width W of the cutting edge portion 10A can arbitrarily be changed according to, e.g., the shape of the burr formed corresponding to the object to be processed.

Also, besides deburring processing, the cutter blade 10 can perform shaving processing of shaving a ridge, a projection or the like formed on a surface of a resin molding 20 like a chisel or the like to flatten the surface of the resin molding 20. In this case, the cutter blade 10 is biased against the resin molding 20, which is similar to the case described above.

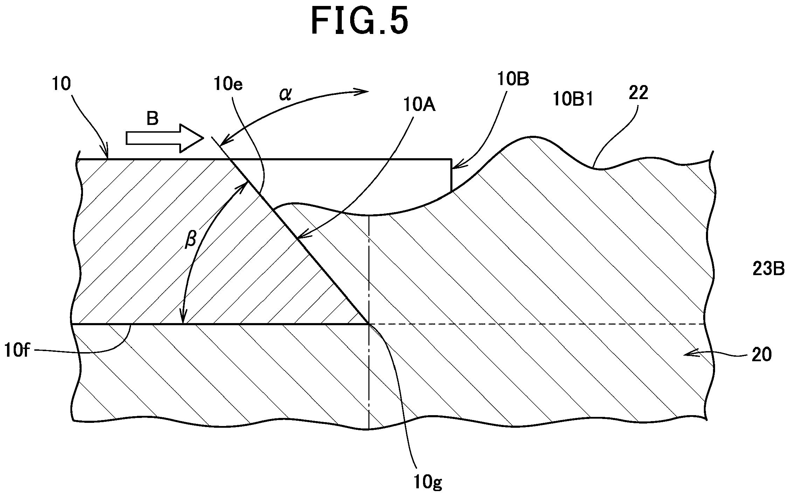

Figure 5 is a cross-sectional view illustrating a distal end part of the cutter blade 10.

The cutting edge portion 10A of the cutter blade 10 includes a cutting edge 10g, which is a ridgeline formed by a rake surface 10e and a side surface 10f positioned on the resin molding 20 side of the cutter blade 10.

A wedge angle β of the cutting edge portion 10A of the cutter blade 10 is set to 15° to 80°. In the mode of use in Figure 5, the side surface 10f of the cutter blade 10 is in abutment with a surface of the resin molding 20, and a total of the wedge angle β and a positive rake angle α is 90°.

Also, the profiling portion 10B of the cutter blade 10 is a part to be pressed against the respective surface portions 23A and 23B (only the surface portion 23B illustrated) of the resin molding 20 by the floating mechanism, is positioned ahead of (in the vicinity of) the cutting edge 10g (blade edge) of the cutting edge portion 10A in an advancement direction (arrow B direction) and includes a rounded surface portion 10B1 that has a circular arc shape in cross section and extends forward from the cutting edge 10g of the cutting edge portion 10A in the advancement direction (arrow B direction).

For example, if the wedge angle β of the cutting edge portion 10A exceeds 80°, the cutting edge portion 10A cuts poorly. Also, if the wedge angle β of the cutting edge portion 10A is less than 15°, damage such as chipping, breakage and/or abrasion of the cutting edge portion 10A is likely to occur.

On the other hand, in the present example, as described above, as a result of a relatively-large wedge angle β of 15° to 80° being set for the cutting edge portion 10A, even with a difficult-to-cut material like a composite material such as FRP, CFRP or GFRP, damage such as chipping, breakage and/or abrasion of the cutting edge portion 10A is less likely to occur, ensuring that the cutting edge portion 10A cuts well over a long period of time.

Also, irrespective of the manner in which the profiling portion 10B abuts against an object to be processed, where the shape is unstable like a resin part or when cutting off a burr formed in a curved shape, the cutting edge portion 10A can be restrained from digging into the material, enabling suppression of occurrence of a failure such as fracturing of the cutting edge portion 10A.

Although the wedge angle β is set to 15° to 80°, the wedge angle β is desirably 30° to 80°, more desirably 40° to 60°, even more desirably 45° to 55°.

It has been found out that where the wedge angle β is 45° to 55°, damage such as chipping, breakage and/or abrasion of the cutting edge portion 10A is least likely to occur, a durability of the cutter blade 10 is enhanced and the cutting edge portion 10A cuts best.

Deburring processing operation using the above-described cutter blade 10 will be described below.

In Figures 1, 2 and 4, the six-axis vertical articulated robot 3 of the processing device 1 controls operation of the joints 3A to 3F so that an orientation and a drive direction of the cutter blade 10 of the arm distal end portion 3G become optimum, for a resin molding 20, which is an object to be processed, along a deburring path corresponding to a position where a burr 22 is formed. As described above, the sliding section 5 of the arm distal end portion 3G floats relative to the resin molding 20.

Therefore, in the present example, in driving the arm distal end portion 3G based on path information obtained by direct teaching or an automatic path generation system, the pressures applied to the respective air supply ports are controlled. As a result, the sliding section 5 is driven by the pair of pneumatic cylinders 5A and 5A and the cutter blade 10 is pressed against the resin molding 20 at a predetermined pressure. The pressures applied to the respective air supply ports can automatically be changed according to the position of the cutter blade 10, and are consistently constant irrespective of the position of the cutter blade 10.

In this state, the profiling portion 10B is pressed against surface portions 23A and 23B of the resin molding 20 and is moved to cut off a burr 22 formed on a partition line (corresponding to a deburring path) 21 of the resin molding 20 along a root of the burr 22 by means of the cutting edge portion 10A and smooth the surface after the cutting by means of the profiling portion 10B.

As a result, the burr 22 of the resin molding 20 having an unstable shape can be removed at the root thereof without using an expensive control device, a workpiece positioning device or an expensive cutter blade and without the cutting edge portion 10A digging into the resin molding 20. Also, in the processing device 1 according to the present example, the floating mechanism is provided and profiling control is performed, and thus, almost no work corresponding to a correction of a teaching position is required, enabling substantial processing time reduction.

As illustrated in Figure 5, the blade edge of the cutting edge portion 10A is positioned behind the profiling portion 10B, and thus, even if there is a deformation in the resin molding 20, the cutting edge portion 10A can further be restrained from digging into the resin molding 20.

Also, as illustrated in Figures 2, 4 and 5, the cutter blade body 10C has a flat plate shape, and thus, enables the cutter blade 10 to easily follow the resin molding 20, enabling enhancement in processability.

Also, the cutter blade 10 is used for shaving processing, enabling enhancement in accuracy of finish of a processed surface of a processed object (resin molding 20), which is of a difficult-to-cut material.

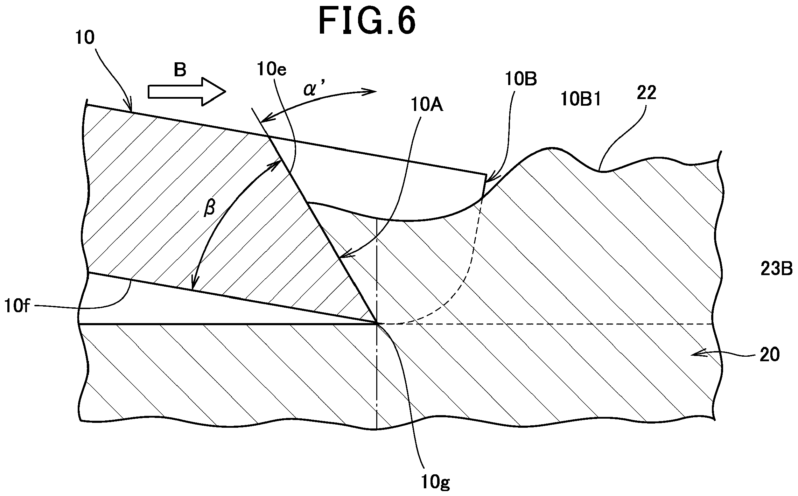

Figure 6 is a cross-sectional view illustrating another mode of use of the cutter blade 10 according to the first example.

A position where the profiling portion 10B abuts against a workpiece varies according to, e.g., a posture of the six-axis vertical articulated robot 3 and/or a shape of the workpiece. In the mode in Figure 6, processing is performed with the side surface 10f of the cutter blade 10 away from a surface of a resin molding 20. Here, a positive rake angle α' is small compared to the mode in Figure 5. In this state, also, it has been found out that when the wedge angle β is set to 15° to 80°, damage such as chipping, breakage or abrasion of the cutting edge portion 10A is less likely to occur, the durability of the cutter blade 10 is enhanced and the cutter blade 10 cuts well.

### <Second Example>

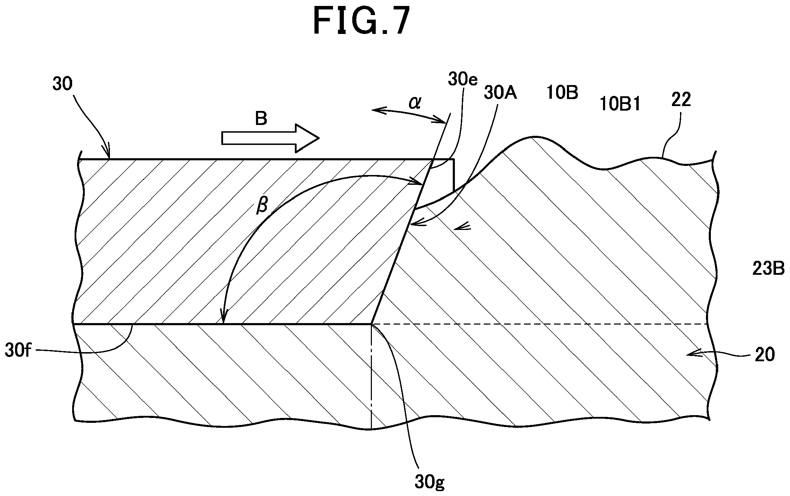

Figure 7 is a cross-sectional view illustrating a distal end part of a cutter blade 30 according to a second example not according to the present invention.

Components that are identical to those of the cutter blade 10 according to the first example illustrated in Figure 5 are provided with reference numerals that are the same as those of the cutter blade 10, and detailed description thereof will be omitted.

The cutter blade 30 includes a cutting edge portion 30A to be brought into abutment with and cut off a root of a burr 22, and profiling portion 10B to be pressed against surface portions 23A and 23B (only the surface portion 23B illustrated) of a resin molding 20 by a floating mechanism.

The cutting edge portion 30A includes a cutting edge 30g corresponding to a ridgeline formed by a rake surface 30e and a side surface 30f positioned on the resin molding 20 side of the cutter blade 30.

A wedge angle β of the cutting edge portion 30A is set to 93° to 120°. In the mode of use in Figure 7, the side surface 30f of the cutter blade 30 is in abutment with a surface of the resin molding 20, and an angle resulting from a negative rake angle α being subtracted from the wedge angle β is 90°.

Also, the profiling portion 10B is positioned ahead of the cutting edge 30g (blade edge) of the cutting edge portion 30A in an advancement direction (arrow B direction), and includes a rounded surface portion 10B1 having a circular arc shape in cross section and extending ahead from the cutting edge 30g of the cutting edge portion 30A in the advancement direction (arrow B direction).

Besides deburring processing, the cutter blade 30 can perform shaving processing of shaving a ridge, a projection or the like formed on a surface of a resin molding 20 like a chisel or the like to flatten the surface of the resin molding 20. In this case, the cutter blade 30 is biased against the resin molding 20, which is similar to the cases described above.

For example, if the wedge angle β of the cutting edge portion 30A is 90° < β < 93°, a cut amount is large, which causes chatter vibration, resulting in deterioration in finish of the processed surface. If the wedge angle β exceeds 120°, the cut amount is smaller, resulting in failure to sufficiently remove the burr.

On the other hand, in the present example, as described above, as a result of a large wedge angle β of 93° to 120° being set for the cutting edge portion 30A, even with a difficult-to-cut material like a composite material such as FRP, CFRP or GFRP, damage such as chipping, breakage and/or abrasion of the cutting edge portion 30A is less likely to occur, ensuring that the cutting edge portion 30A cuts well over a long period of time.

Also, the negative rake angle of the cutting edge portion 30A enables smoothing the surface after the removal of the burr 22, enabling the processed surface to be smoother. Also, chatter vibration is less likely to occur, ensuring a sufficient cut amount.

Although the wedge angle β is set to 93° to 120°, the wedge angle β may be 95° to 120°, and is desirably 95° to 115°, more desirably 95° to 100°.

It has been found out that where the wedge angle β is 95° to 100°, damage such as chipping, breakage and/or abrasion of the cutting edge portion 30A is least likely to occur, a durability of the cutter blade 10 is enhanced and the cutting edge portion 10A cuts best.

In the cutter blades 10 and 30 in Figures 5 and 6, even if the cutter blades 10 and 30 are formed so as to have a wedge angle β of 80°< β < 93°, the cutter blades 10 and 30 can be used for deburring processing, depending on, e.g., a material, a hardness and/or a shape of an object to be processed and/or the type of the cutter blade.

A processing device 1 in which pneumatic cylinders 5A and 5A are provided in a six-axis vertical articulated robot 3 and a cutter blade 10 or 30 is provided in the six-axis vertical articulated robot 3 via the pneumatic cylinders 5A and 5A includes a cutter blade 30 that includes profiling portion 10B corresponding to a resin molding 20 and that further includes a cutting edge portion 30A including a blade edge positioned in the vicinity of the profiling portion 10B and having a wedge angle β of 15° to 120°, the profiling portion 10B and the cutting edge portion 30A being integrated, and thus, the wedge angle β of the cutting edge portion 10A or 30A included in the processing device 1 is made to be large compared to those of the conventional techniques, enabling processing of a composite material, for example, FRP, CFRP or GFRP, which is a difficult-to-cut material without damage such as chipping of the cutting edge portion 30A.

Accordingly, the need to use an expensive cutter blade and/or employ a special processing method for lifetime extension can be eliminated, enabling suppression of increase in costs of the processing device 1.

Also, the provision of the profiling portion 10B enables the cutting edge portion 10A or 30A to be restrained from digging into a resin molding 20.

Also, in the cutter blade 30, the blade edge of the cutting edge portion 30A is positioned behind the profiling portion 10B, and thus, even if there is a deformation in the resin molding 20, the cutting edge portion 30A can further be restrained from digging into the resin molding 20.

Also, the cutter blade 30 shaves the resin molding 20, enabling enhancement in accuracy of finish of the processed surface of the processed object (resin molding 20), which is of a difficult-to-cut material.

### <Third Example>

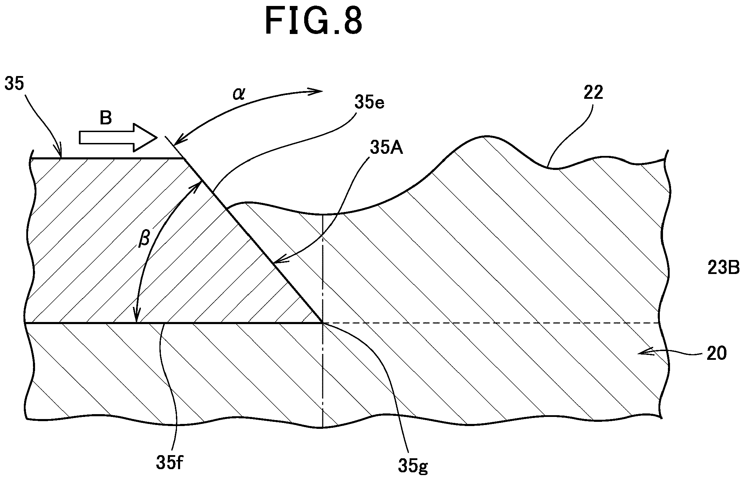

Figure 8 is a cross-sectional view illustrating a distal end part of a cutter blade 35 according to a third example not according to the present invention.

Components that are identical to those of the first example illustrated in Figure 5 are provided with reference numerals that are the same as those of the first example, and detailed description thereof will be omitted.

The cutter blade 35 includes a cutting edge portion 35A to be brought into abutment with and cut off a root of a burr 22, and a profiling surface 35f, which serves as a profiling portion to be pressed against surface portions 23A and 23B (only the surface portion 23B illustrated) of a resin molding 20 by a floating mechanism. The cutting edge portion 35A includes a cutting edge 35g corresponding to a ridgeline formed by a rake surface 35e and the profiling surface 35f.

A wedge angle β of the cutting edge portion 35A is set to 15° to 80°. The profiling surface 35f includes the cutting edge 35g, and the profiling surface 35f extends rearward from the cutting edge 35g (blade edge) in an advancement direction (arrow B direction).

Besides deburring processing, the cutter blade 35 can perform shaving processing of shaving a ridge, a projection or the like formed on a surface of a resin molding 20 like a chisel or the like to flatten the surface of the resin molding 20. In this case, the cutter blade 35 is biased against the resin molding 20, which is similar to the cases described above.

In the cutting edge portion 35A, the cutting edge 35g (blade edge) is positioned at a distal end portion of the profiling surface 35f, allowing the profiling surface 35f, which forms a part of the cutting edge 35g, to serves as a profiling portion, and thus, the cutter blade 35 can be formed in a simple shape, enabling cost reduction.

Although the wedge angle β is set to 15° to 80°, the wedge angle β is desirably 30° to 80°, more desirably 40° to 60°, even more desirably 45° to 55°.

It has been found out that there the wedge angle β is 45° to 55°, damages such as chipping, breakage and/or abrasion of the cutting edge portion 35A is least likely to occur, a durability of the cutter blade 35 is enhanced and the cutting edge portion 35A cuts best.

### <Fourth Example>

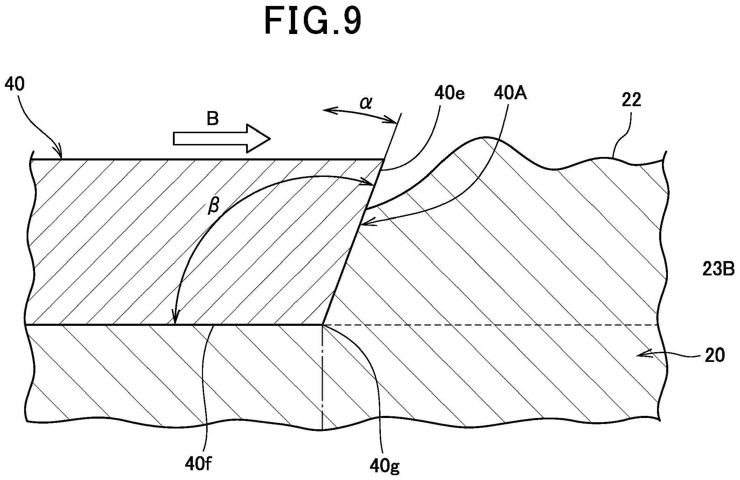

Figure 9 is a cross-sectional view illustrating a distal end part of a cutter blade 40 according to a fourth example not according to the present invention.

Components that are identical to those of the second example illustrated in Figure 7 are provided with reference numerals that are the same as those of the second example, and detailed description thereof will be omitted.

The cutter blade 40 includes a cutting edge portion 40A to be brought into abutment with and cut off a root of a burr 22, and a profiling surface 40f, which serves as a profiling portion to be pressed against surface portions 23A and 23B (only the surface portion 23B illustrated) of a resin molding 20 by a floating mechanism. The cutting edge portion 40A includes a cutting edge 40g corresponding to a ridgeline formed by a rake surface 40e and the profiling surface 40f.

A wedge angle β of the cutting edge portion 40A is set to 93° to 120°. The profiling surface 40f includes the cutting edge 40g, and the profiling surface 40f extends rearward from the cutting edge 40g (blade edge) in an advancement direction (arrow B direction).

### <Fifth Example>

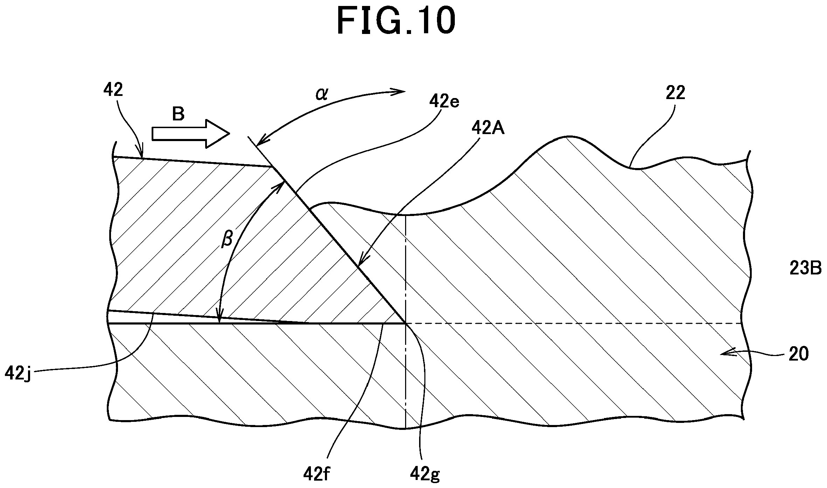

Figure 10 is a cross-sectional view illustrating a distal end part of a cutter blade 42 according to a fifth example, which is an embodiment of the present invention. Components that are identical to those of the first example illustrated in Figure 5 and the third example illustrated in Figure 8 are provided with reference numerals that are the same as those of the first and third examples, and detailed description thereof will be omitted.

The cutter blade 42 includes a cutting edge portion 42A to be brought into abutment with and cut off a root of a burr 22, and a profiling surface 42f, which serves as a profiling portion to be pressed against surface portions 23A and 23B (only the surface portion 23B illustrated) of a resin molding 20 by a floating mechanism. The cutting edge portion 42A includes a cutting edge 42g corresponding to a ridgeline formed by a rake surface 42e and the profiling surface 42f.

A wedge angle β of the rake surface 42e is set to 15° to 80°. The profiling surface 42f includes the cutting edge 42g, and the profiling surface 42f extends rearward from the cutting edge 42g (blade edge) in an advancement direction (arrow B direction). Behind the profiling surface 42f, the cutter blade 42 includes a clearance portion 42j away from the surface portions 23A and 23B.

For example, if the wedge angle β of the cutting edge portion 42A exceeds 80°, the cutting edge portion 42A cuts poorly. Also, if the wedge angle β of the cutting edge portion 42A is less than 15°, damage such as chipping, breakage and/or abrasion of the cutting edge portion 42A is likely to occur.

The wedge angle β is set to 30° to 80°, more desirably 40° to 60°, even more desirably 45° to 55°.

It has been found out that when the wedge angle β is 45° to 55°, damage such as chipping, breakage and/or abrasion of the cutting edge portion 42A is least likely to occur, a durability of the cutter blade 42 is enhanced and the cutting edge portion 42A cuts best.

### <Sixth Example>

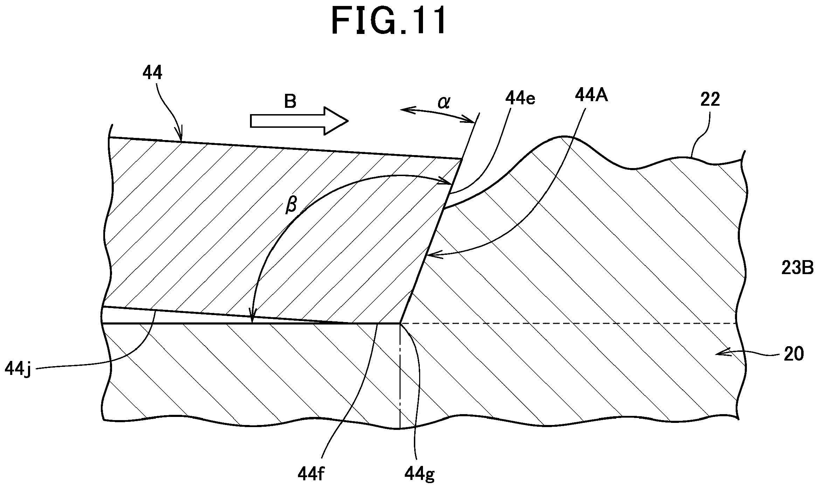

Figure 11 is a cross-sectional view illustrating a distal end part of a cutter blade 44 according to a sixth example, which is an embodiment of the present invention.

Components that are identical to those of the second example illustrated in Figure 7 and the fourth example illustrated in Figure 9 are provided with reference numerals that are the same as those of the second and fourth examples, and detailed description thereof will be omitted.

The cutter blade 44 includes a cutting edge portion 44A to be brought into abutment with and cut off a root of a burr 22, and a profiling surface 44f, which serves as a profiling portion to be pressed against surface portions 23A and 23B (only the surface portion 23B illustrated) of a resin molding 20 by a floating mechanism. The cutting edge portion 44A includes a cutting edge 44g corresponding to a ridgeline formed by a rake surface 44e and the profiling surface 44f.

A wedge angle β of the cutting edge portion 44A is set to 93° to 120°. The profiling surface 44f includes the cutting edge 44g, and the profiling surface 44f extends rearward from the cutting edge 44g (blade edge) in an advancement direction (arrow B direction). Behind the profiling surface 44f, the cutter blade 44 includes a clearance portion 44j away from the surface portions 23A and 23B.

If the wedge angle β of cutting edge portion 44A is 90 < β < 93°, a cut amount is large, which causes chatter vibration, resulting in deterioration in finish of the processed surface. If the wedge angle β exceeds 120°, the cut amount is small, resulting in failure to sufficiently remove the burr.

In each of the above-described cutter blades illustrated in Figures 8 to 11, even if the cutter blade is formed so as to have a wedge angle β of 80°< β < 93°, the cutter blade can be used for deburring processing, depending on, e.g., a material, a hardness and/or a shape of an object to be processed and/or the type of the cutter blade.

Note that only cutter blades with the ranges as claimed form part of the invention.

Each of the above-described embodiments can arbitrarily be altered.

For example, in the above-described examples, as illustrated in Figure 2, the biasing mechanism is provided by the pneumatic cylinders 5A, but the biasing mechanism is not limited to that provided by the pneumatic cylinders 5A, and may be provided by other means such as a spring or a solenoid.

Also, as illustrated in Figure 1, the processing device 1 includes the six-axis vertical articulated robot 3; however, the present invention is not limited to this case, and the processing device 1 may include another type of robot.

Also, the above-described cutter blade 10 can be ultrasonically vibrated in a direction (arrow C direction (see Figure 3)) substantially perpendicular to the advancement direction (arrow B direction (see Figure 3)) of the cutter blade 10, according to vibration of the ultrasonic transducer 7. An ultrasonic unit (not illustrated) is connected to the ultrasonic transducer 7, enabling the cutter blade 10 to be driven with an amplitude of, for example, around 30 to 50 µm by the ultrasonic unit.

Although in each of the above-described examples, the cutter blade 10 is not ultrasonically vibrated during deburring processing, deburring processing may be performed with the cutter blade 10 ultrasonically vibrated, depending on, e.g., a material, a hardness or a shape of an object to be processed.

### Reference Signs List

1 processing device
3 six-axis vertical articulated robot (robot)
5A pneumatic cylinder (biasing mechanism)
10, 30, 35, 40, 42, 44 cutter blade
10A, 30A, 35A, 40A, 42A, 44A cutting edge portion
10B profiling portion
10C cutter blade body
20 resin molding (workpiece)
35f, 40f, 42f, 44f profiling surface (profiling portion)
β wedge angle

## Claims

1. A cutter blade (42) to be attached to a robot via a biasing mechanism, the cutter blade (42) comprising:
a profiling surface (42f) to be pressed against a surface portion (23B) of a workpiece (20) by the biasing mechanism, and
a cutting edge portion (42A) including a blade edge (42g) positioned on a ridgeline formed by the profiling surface (42f) and a rake surface (42e), the cutting edge portion (42A) including a clearance portion (42j) located behind, relative to an advancement direction (B), the profiling surface (42f), to be vibrated in use by a transducer and **characterized by** having a wedge angle (β) of 30° to 80°, the profiling surface (42f) and the cutting edge portion (42A) being integrated.

2. A cutter blade (44) to be attached to a robot via a biasing mechanism, the cutter blade (44) comprising:
a profiling surface (44f) to be pressed against a surface portion (23B) of a workpiece (20) by the biasing mechanism, and
a cutting edge portion (44A) including a blade edge (44g) positioned on a ridgeline formed by the profiling surface (44f) and a rake surface (44e), the cutting edge portion (44A) including a clearance portion (44j) located behind, relative to an advancement direction (B), the profiling surface (44f) and being **characterized by** having a wedge (β) of 93° to 120°, the profiling surface (44f) and the cutting edge portion (44A) being integrated.

3. The cutter blade (42, 44) according to claim 1 or 2, wherein a cutter blade body has a flat plate shape.

4. A processing device including a cutter blade (42) according to claim 1 provided in a robot via a biasing mechanism.

5. A processing device including a cutter blade (44) according to claim 2 provided in a robot via a biasing mechanism.

## Patentansprüche

1. Schneideklinge (42) zur Befestigung an einem Roboter mittels eines Vorspannmechanismus, wobei die Schneideklinge (42) umfasst:
eine Profilierungsoberfläche (42f) zum Drücken gegen einen Oberflächenteil (23B) eines Werkstücks (20) mittels des Vorspannmechanismus und
einen Schneideklingenteil (42A), der eine Schneide (42g) einschließt, die auf einer Kammlinie angeordnet ist, die durch die Profilierungsoberfläche (42f) und
eine Schrägoberfläche (42e) gebildet ist, wobei der Schneideklingenteil (42A) einen Abstandsteil (42j) einschließt, der, relativ zu einer Fortschrittsrichtung (B), hinter der Profilierungsoberfläche (42f) angeordnet ist, zur Vibration in Benutzung durch einen Wandler und **gekennzeichnet durch** das Aufweisen eines Keilwinkels (β) von 30° bis 80°, wobei die Profilierungsoberfläche (42f) und der Schneidklingenteil (42A) integriert sind.

2. Schneideklinge (44) zur Befestigung an einem Roboter mittels eines Vorspannmechanismus, wobei die Schneideklinge (44) umfasst:
eine Profilierungsoberfläche (44f) zum Drücken gegen einen Oberflächenteil (23B) eines Werkstücks (20) mittels des Vorspannmechanismus und
einen Schneideklingenteil (44A), der eine Schneide (44g) einschließt, die auf einer Kammlinie angeordnet ist, die durch die Profilierungsoberfläche (44f) und
eine Schrägoberfläche (44e) gebildet ist, wobei der Schneideklingenteil (44A) einen Abstandsteil (44j) einschließt, der, relativ zu einer Fortschrittsrichtung (B), hinter der Profilierungsoberfläche (44f) angeordnet ist und **dadurch**
**gekennzeichnet ist, dass** er einen Keilwinkel (β) von 93° bis 120° aufweist, wobei die Profilierungsoberfläche (44f) und der Schneidklingenteil (44A) integriert sind.

3. Schneideklinge (42, 44) gemäß Anspruch 1 oder 2, wobei ein Schneideklingenkörper eine flache Plattenform aufweist.

4. Bearbeitungsvorrichtung, die eine Schneideklinge (42) gemäß Anspruch 1 einschließt, die in einem Roboter mittels eines Vorspannmechanismus bereitgestellt ist.

5. Bearbeitungsvorrichtung, die eine Schneideklinge (44) gemäß Anspruch 2 einschließt, die in einem Roboter mittels eines Vorspannmechanismus bereitgestellt ist.

## Revendications

1. Lame d'élément de coupe (42) à attacher à un robot par l'intermédiaire d'un mécanisme de poussée, la lame d'élément de coupe (42) comprenant:
une surface de profilage (42f) à presser contre une partie de surface (23B) d'une pièce (20) à l'aide du mécanisme de poussée, et
une partie de bord de coupe (42A) comprenant un bord de lame (42g) positionné sur une ligne de crête formée par la surface de profilage (42f) et une surface de dépouille (42e), la partie de bord de coupe (42A) comprenant une partie de dégagement (42j) située derrière la surface de profilage (42f) par rapport à une direction d'avancement (B), devant être mise en vibration lors de l'utilisation par un transducteur, et **caractérisée en ce qu'**elle présente un angle de coin (β) de 30° à 80°, la surface de profilage (42f) et la partie de bord de coupe (42A) étant intégrées.

2. Lame d'élément de coupe (44) à attacher à un robot par l'intermédiaire d'un mécanisme de poussée, la lame d'élément de coupe (44) comprenant:
une surface de profilage (44f) à presser contre une partie de surface (23B) d'une pièce (20) à l'aide du mécanisme de poussée, et
une partie de bord de coupe (44A) comprenant un bord de lame (44g) positionné sur une ligne de crête formée par la surface de profilage (44f) et une surface de dépouille (44e), la partie de bord de coupe (44A) comprenant une partie de dégagement (44j) située derrière la surface de profilage (44f) par rapport à une direction d'avancement (B), et **caractérisée par** un angle de coin (β) de 93° à 120°, la surface de profilage (44f) et la partie de bord de coupe (44A) étant intégrées.

3. Lame d'élément de coupe (42, 44) selon la revendication 1 ou 2, dans laquelle un corps de lame d'élément de coupe présente une forme de plaque plate.

4. Dispositif de traitement comprenant une lame d'élément de coupe (42) selon la revendication 1 amenée dans un robot par l'intermédiaire d'un mécanisme de poussée.

5. Dispositif de traitement comprenant une lame d'élément de coupe (44) selon la revendication 2 amenée dans un robot par l'intermédiaire d'un mécanisme de poussée.
